# EUROPEAN PATENT SPECIFICATION

(11) **EP 3 455 489 B1**
(45) Date of publication and mention of the grant of the patent: **15.04.2020**
(21) Application number: 17721645.4
(22) Date of filing: 03.05.2017
(51) Int. Cl.: F03B 13/26, F03B 17/06

(54) **WATER CURRENT TURBINE ARRANGEMENTS**
ANORDNUNG VON WASSERTURBINEN
DISPOSITION DES TURBINES DE COURANT D'EAU

(30) Priority: 10.05.2016 GB 201608156
(43) Date of publication of application: 20.03.2019
(73) Proprietor: Tidal Generation Limited, London, W6 8BJ (GB)
(72) Inventor: RHYMES, Jonathan Paul, Bristol Gloucestershire BS1 3AG (GB)
(74) Representative: Openshaw & Co.
(86) International application number: PCT/EP2017/060557
(87) International publication number: WO 2017/194370

(56) References cited:
- GB-A- 2 486 700
- GB-A- 2 491 028
- FUNKE S W ET AL: "Tidal turbine array optimisation using the adjoint approach", RENEWABLE ENERGY, vol. 63, 5 November 2013 (2013-11-05), pages 658-673, XP028796982, ISSN: 0960-1481, DOI: 10.1016/J.RENENE.2013.09.031
- GONZÁLEZ-GORBE PRG NA EDUARDO ET AL: "Optimisation of hydrokinetic turbine array layouts via surrogate modelling", RENEWABLE ENERGY, PERGAMON PRESS, OXFORD, GB, vol. 93, 27 February 2016 (2016-02-27), pages 45-57, XP029481830, ISSN: 0960-1481, DOI: 10.1016/J.RENENE.2016.02.045
- CULLEY D M ET AL: "Integration of cost modelling within the micro-siting design optimisation of tidal turbine arrays", RENEWABLE ENERGY, vol. 85, 27 June 2015 (2015-06-27), pages 215-227, XP029291199, ISSN: 0960-1481, DOI: 10.1016/J.RENENE.2015.06.013

## Description

The present invention relates to water current turbine arrangements, and to methods for determining such arrangements.

### BACKGROUND OF THE INVENTION

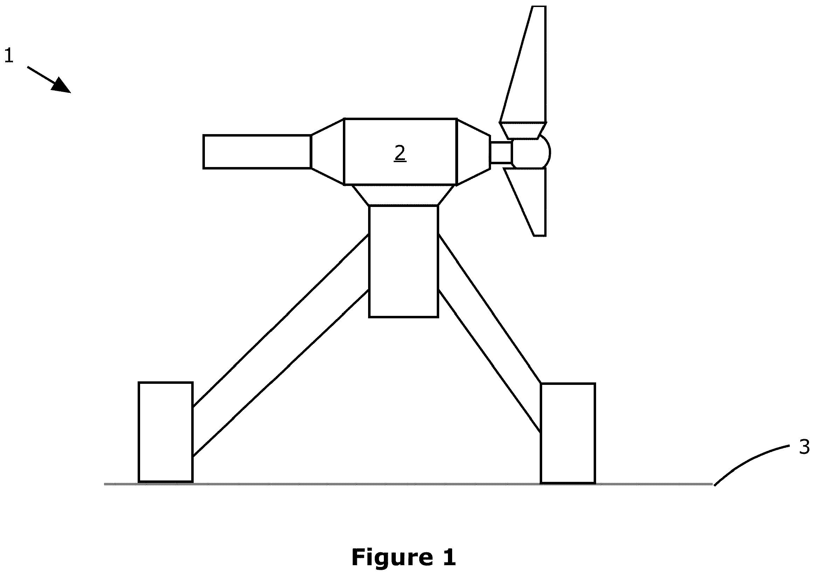

It is widely known that easily accessible resources of fossil fuels are declining. In addition, the impact of the use of fossil fuels upon the environment has become increasingly apparent. As a result of this, it has become imperative that viable alternative energy sources are used as effectively and efficiently as possible. The use of water current turbine power generating units to capture the power of water flow, such as tidal, river and ocean current flows is becoming a viable source of alternative energy. An example power generating unit 1 is shown in Figure 1 of the accompanying drawings, and includes a turbine unit 2 located on a bed 3 of a body of water. The turbine unit 2 includes a shaft driven generator connected using a drivetrain to a rotor assembly. The rotor assembly includes a plurality of rotor blades that are driven by the water flow, so as to turn an input shaft of the drivetrain. As water flows past the power generating apparatus 1, the rotor assembly is caused to rotate, thereby driving the generator. In such a manner, the generator is able to generate electrical power.

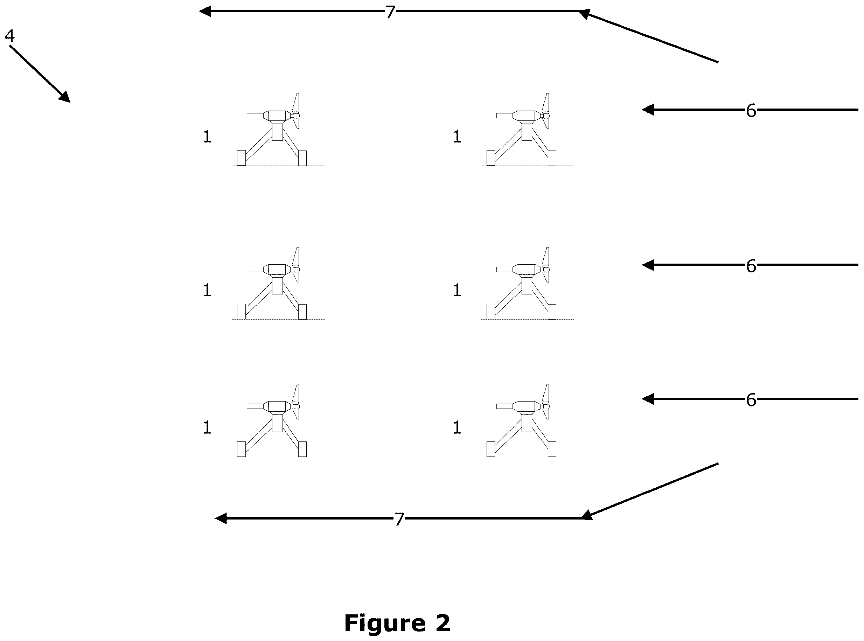

In order to be economically practical, multiple turbine units need to be deployed in a suitable region, in a "farm". For example, a tidal turbine farm may have tens to hundreds of turbine units. Previously-considered farm layouts are based on regular grids or arrays of turbine units. Such arrays have multiple rows, each of which includes multiple turbine units spaced apart along the row. Figure 2 of the accompanying drawings illustrates, in very simplified schematic form, a view of such an array 4. The array 4 in this example includes just two rows of three turbine units 1 each, for the sake of clarity and simplicity. It will be readily appreciated that the number of rows, and the number of units per row may vary from the example shown. The regular array 4 is located in a water current 6. The array 4 could be deployed in a tidal flow area, a river flow, an ocean current, or any other suitable water current area. The direction of flow shown in Figure 2 is exemplary. In a farm installed in a tidal region, the flow direction will change over time, as is well known and understood.
Modelling of such array-based farms in channel and unrestrained areas has shown a tendency for the flow to take the path of least resistance. This results in a proportion of the water current to flow around individual turbines and clusters of turbines rather than through them. This can have the effect of reducing the yield and economic viability of the array. In the example of Figure 2, the incoming flow 6 is diverted around the array to a certain extent, and follows the alternative flow path 7 around the array of turbine units 1.
Such an effect reduces the amount of power that can be generated by the array 4. It is, therefore, desirable to provide a farm arrangement that reduces such losses. It is also desirable to provide a technique for determining such an arrangement.
"Tidal turbine array optimisation using the adjoint approach" is a paper by Funke SW et al, published on pages 658-673 of vol. 63 of RENEWABLE ENERGY on 31 September 2013 (XP028796982), (ISSN: 0960-1481).

### SUMMARY OF THE INVENTION

According to the invention, there is provided a water current turbine arrangement according to claim 1.

According to the present invention, there is provided a method of determining an arrangement of a water current turbine farm according to claim 3. In one example, the arrangement of turbine units optimises power output form the water current turbine farm as a whole by ensuring that a higher volume of water flows past the turbine units.
In one example, the location may have at least one boundary, and spacing of the turbine units may decrease closer to the at least one boundary.

According to the invention, the location may have a flow direction, and the water current turbine power generating units may be arranged in a series, each water current turbine power generating unit may be spaced apart from the next unit in the series.
The units of the plurality of water current turbine power generating units may be arranged so that at least one unit receives diverted flow from another unit. This way the invention increases the energy captured from the flow.
The water current turbine power generating units may be arranged in a staggered formation. The water current turbine power generating units may be arranged in the series such that each subsequent power generation unit is located to the rear and/or the side of a preceding power generating unit. The water current turbine power generating units may be arranged such that units may be arranged in a substantially parallel formation. The units may be arranged such that they are substantially parallel to the flow direction. The units may be arranged such that they are substantially perpendicular to the flow direction.

According to the invention, the water current turbine power generating units may be spaced substantially symmetrically in a direction which may be substantially perpendicular to a main flow direction. Preferably at the location.

In one example, the water current turbine power generating units may be spaced substantially symmetrically in a direction substantially parallel to a main flow direction. Preferably at the location

### BRIEF DESCRIPTION OF THE DRAWINGS

Figure 1 is a schematic view of a water current turbine power generating unit;
Figure 2 is a schematic view of a previously-considered arrangement of water current turbine power generating units;
Figure 3 is a schematic view of an example arrangement of water current turbine power generating units embodying one aspect of the present invention;
Figure 4 illustrates flow effects of turbines; and
Figure 5 is a flowchart illustrating steps in a method embodying another aspect of the present invention.

### DETAILED DESCRIPTION OF THE PREFERRED EMBODIMENTS

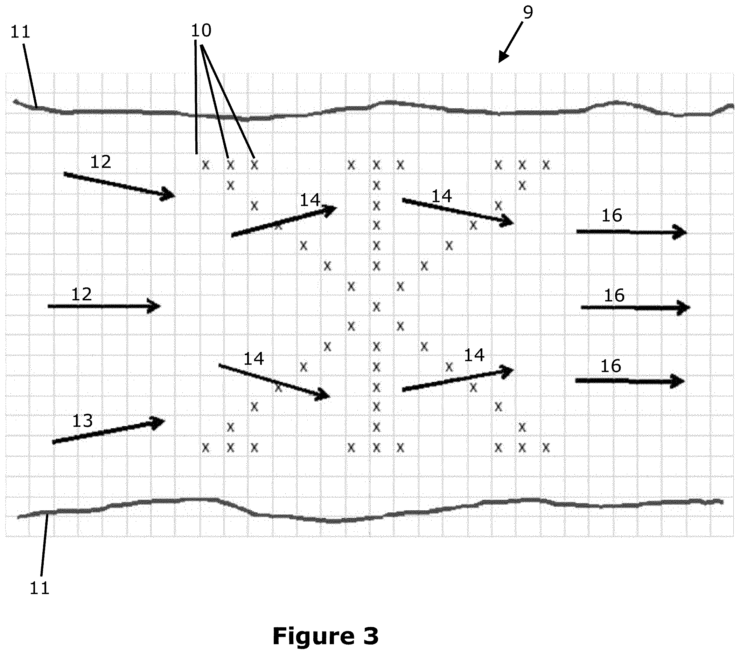

In order to address the disadvantages of previously-considered water current turbine unit farm arrangements, embodiments of the present invention provide arrangements that take into account the flow characteristics of a water current past a turbine unit, and past groups of turbine units, as well the flow characteristics of the region in which the farm is deployed.
One example farm arrangement embodying an aspect of the present invention is illustrated schematically in Figure 3. The arrangement 9 includes a plurality of turbine units 10, each of which is indicated by an 'x' in the Figure for the sake of clarity of Figure 3. It will be readily appreciated that the arrangement of turbine units 10 in Figure 3 is merely an example for use in explaining the principles of the present invention.

In the example of Figure 3, the arrangement 9 is located in a channel having boundaries 11 which define the channel. The channel has an incoming water current 12. In the case of a river, the water current 12 will be in a constant direction, whereas in a tidal region, the direction will change regularly, as well known and understood. The direction shown in Figure 3 is exemplary for the purposes of explaining the principles of the present invention.

The incoming water current 12 is incident on a first group of the turbine units 10 or the arrangement 9. As the water current flows past the turbine units 10, its direction and power is affected by those turbine units 10. This change in flow direction is indicated by the intra-farm flow 14. As the flow passes each turbine unit 10 and group of turbine units 10, the flow is changed until it reaches the end of the arrangement and forms an outgoing flow 16.

In accordance with the principles of the present invention, the layout of the arrangement of turbine units is designed in order to increase power output from the arrangement as a whole. In one particular example, the power output is optimised.

A turbine unit extracts energy in dependence of its rating and blade swept area. An increased blade swept area, which increases power output from the turbine unit, results in a slower flow past the turbine unit due to a greater blockage effect local to the turbine. Therefore, when designing the array which includes the micro siting of each turbine unit, power yield can be optimised by adjusting not only the blade length and rating of the turbine unit, but also the proximity and location of the turbines. The proximity of the turbine units affects the packing density of the units in the arrangements. The packing density can also be optimised to direct the flow. For example, by increasing the density at the extremities of the arrangement, incoming water current flow can be diverted towards the centre of the arrangement. This management of the flow direction enables a higher volume of water to flow past the turbine units in the centre of the arrangement, thereby maximising total power yield of the arrangement.

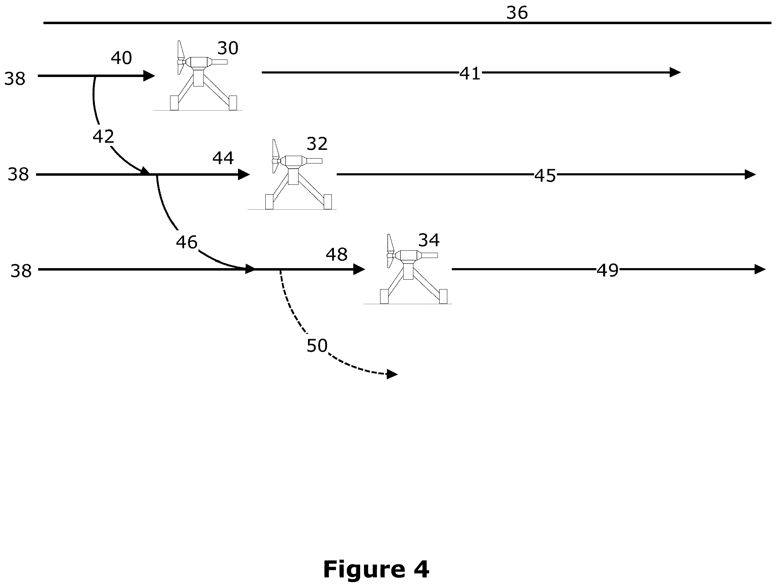

Figure 4 illustrates water current flow through a plurality of turbines 30, 32, 34 within a flow channel having a boundary 36. The water current is represented by arrows 38.

A first turbine 30 is located closest to the boundary 36, with second and third turbines 32 and 34 being located at increasing respective distances from the boundary 36. The plurality of turbines 30, 32, 34 are in a staggered arrangement, wherein the second turbine 32 located behind and to one side of the first turbine 30, and the third turbine 34 is located behind and to the side of the second turbine 32. As shown in Figure 4, the turbines are arranged in a diagonal line with respect to the boundary 36.

The flow 38 is incident on of the turbines, although the presence of the turbines affects the flow, as will be described. It will be readily appreciated that Figure 4 is merely shown for the purposes of illustrating the principles of turbine placement in accordance with a method embodying the present invention.

For the first turbine 30, a proportion of the incident flow 38 flows through the first turbine 30. This proportion is referred to below as a first modified flow 40. The first turbine 30 presents a partial blockage to the incident flow 38, and so the remainder of the flow is diverted around the first turbine 30. This part of the flow is referred to as a first diverted flow 42. In one example, 50% of the incident flow 38 passes through the turbine 30 as the first modified flow 40, and the remaining 50% flows around the turbine 30 as the first diverted flow 42.

The location of the second turbine 32 behind and to one side of the first turbine with respect to the flow 38 allows the second turbine to make use of the diverted flow. In this way the first diverted flow 42 combines with the incident flow 38 in the direction of the second turbine 32. A second modified flow 44 is incident on the second turbine 32, and this second modified flow is the result of the partial diversion of the combined flow around the second turbine 32. The second turbine 32, therefore, is subject to a second modified flow 44, which may, for example, be 50% of the combined flow. The remaining flow is diverted around the second turbine 32 to form a second diverted flow 46. Similarly, the third turbine 34 experiences an increased third modified flow 48, due to the combination of the incident flow 38 with the second diverted flow 46. This pattern is continued through the array, until another channel boundary is reached (as illustrated in Figure 3), or until edge of the array is reached.

For a constant incident flow 38, and a simplified model in which no flow is lost outside of the turbine array, this combining of flows results in the second turbine having a proportion of a combined incident flow 38 and first diverted flow 42. Accordingly, the flow experienced by the second turbine 32 is increased over that which would be experienced in a differently-spaced array. To continue the example of 50% flow diversion, the second turbine 32 will experience 50% of 150% of the incident flow, which results in the second turbine experiencing 75% of the incident flow. Similarly, the third turbine 34 will experience 50% of the combination of the second diverted flow 46 and the incident flow 38, resulting in the third turbine experiencing 87.5% of the incident flow.

Using such an arrangement, it is possible to retain much of the flow within the array, and, therefore, usable by the turbines for electricity generation. The resulting arrangement shown in Figure 3, is symmetrical across the flow channel, since the array is located in a flow channel defined by a pair of boundaries. The array is also symmetrical along the flow channel, in order that the array is optimised for both directions of tidal flow. In a flow having a single flow direction, the array need not be symmetrical along the length of the array. Different arrangements are possible that serve to make best use of the incident flow 38.

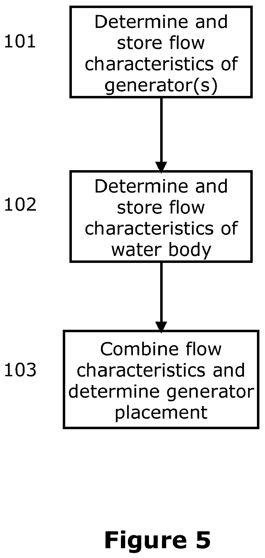

A method for determining a farm arrangement will now be described with reference to Figure 5. In order to determine an optimal, or near optimal arrangement for the turbine units in the farm, it is necessary firstly to determine flow characteristics (step 101) around a single turbine unit, and around different groupings of units. These flow characteristics are then stored for use in determining the arrangement of units in a particular location.

For a particular location, the flow characteristics are determined (step 102), and stored. The flow characteristics may include flow speed, flow direction, water depth, proximity to channel boundaries etc, and may be measured and/or modelled. The flow characteristics may be determined in any suitable level of detail.

The flow characteristics of the turbine unit(s) and the location are then combined (step 103) in order to determine a preferred layout for the farm. This combination may also take into account the nature of the location, such as geography, bathymetry and other factors. The preferred layout optimises the packing density of the turbine units

In such a manner, a method embodying one aspect of the present invention is able to provide an optimised, or at least improved, arrangement of turbine units in a water current power generation farm.

## Claims

1. A water current turbine arrangement (9) of a water current turbine farm at a location, the arrangement (9) comprising:
a plurality of water current turbine power generating units (10)
wherein the location has a flow direction, and wherein the water current turbine power generating units (10) are arranged in a series, each water current turbine power generating unit being spaced apart from the next unit in the series substantially parallel, and substantially perpendicular, to the flow direction;
wherein the water current turbine power generating units (10) are substantially symmetrically spaced in a direction substantially parallel to a main flow direction at the location;
wherein the water current turbine power generating units (10) are substantially symmetrically spaced in a direction substantially perpendicular to a main flow direction at the location; and
wherein the packing density of the water current turbine power generating units (10) is higher at the extremities of the arrangement (9), so that incoming water current flow is diverted towards the centre of the arrangement (9).

2. An arrangement (9) as claimed in claim 1, wherein the location has at least one boundary (11), and wherein spacing of the turbine units (10) decreases closer to the at least one boundary (11).

3. A method of determining an arrangement (9) of turbine units (10) of a water current turbine farm which comprises a plurality of water current turbine power generating units (10) arranged in a predetermined pattern, the method comprising:
determining turbine flow characteristics of a power generating turbine unit, the turbine flow characteristics relating to water flow around such a turbine unit;
storing such determined turbine flow characteristics; and
for a selected location:
determining location flow characteristics for the location concerned, the location flow characteristics relating to water current flow at the location;
storing such determined location flow characteristics;
combining the stored turbine flow characteristics and the stored location characteristics to produce combined flow characteristics; and
determining an arrangement (9) of a plurality of turbine units (10) for the location;
wherein the location has a flow direction, and wherein the water current turbine power generating units (10) are arranged in a series, each water current turbine power generating unit being spaced apart from the next unit in the series substantially parallel, and substantially perpendicular, to the flow direction;
wherein the water current turbine power generating units (10) are substantially symmetrically spaced in a direction substantially parallel to a main flow direction at the location;
wherein the water current turbine power generating units (10) are substantially symmetrically spaced in a direction substantially perpendicular to a main flow direction at the location; and
wherein the packing density of the water current turbine power generating units (10) is higher at the extremities of the arrangement (9), so that incoming water current flow is diverted towards the centre of the arrangement (9).

4. A method as claimed in claim 3, wherein the location has at least one boundary (11), and wherein spacing of the turbine units (10) decreases closer to the at least one boundary (11).

## Patentansprüche

1. Wasserstromturbinenanordnung (9) einer Wasserstromturbinenfarm an einem Standort,
wobei die Anordnung (9) umfasst:
eine Vielzahl von Wasserstromturbinen-Stromerzeugungseinheiten (10), wobei der Standort eine Strömungsrichtung aufweist und wobei die Wasserstromturbinen-Stromerzeugungseinheiten (10) in einer Reihe angeordnet sind, wobei jede Wasserstromturbinen-Stromerzeugungseinheit von der nächsten Einheit in der Reihe im Wesentlichen parallel und im Wesentlichen senkrecht zur Strömungsrichtung beabstandet ist;
wobei die Wasserstromturbinen-Stromerzeugungseinheiten (10) im Wesentlichen symmetrisch in einer Richtung beabstandet sind, die im Wesentlichen parallel zu einer Hauptströmungsrichtung an dem Standort ist;
wobei die Wasserstromturbinen-Stromerzeugungseinheiten (10) im Wesentlichen symmetrisch in einer Richtung beabstandet sind, die im Wesentlichen senkrecht zu einer Hauptströmungsrichtung an dem Standort ist; und
wobei die Packungsdichte der Wasserstromturbinen-Stromerzeugungseinheiten (10) an den Enden der Anordnung (9) höher ist, so dass der einströmende Wasserstromfluss zur Mitte der Anordnung (9) umgeleitet wird.

2. Anordnung (9) nach Anspruch 1, wobei der Standort zumindest eine Umgrenzung (11) aufweist und wobei sich der Abstand der Turbineneinheiten (10) näher zu der zumindest einen Umgrenzung (11) verringert.

3. Verfahren zur Bestimmung einer Anordnung (9) von Turbineneinheiten (10) einer Wasserstromturbinenfarm, die eine Mehrzahl von Wasserstromturbinen-Stromerzeugungseinheiten (10), angeordnet in einem vorbestimmten Muster, umfasst, wobei das Verfahren umfasst:
Bestimmen der Turbinenströmungseigenschaften einer Stromerzeugungsturbineneinheit, wobei sich die Turbinenströmungseigenschaften auf die Wasserströmung um eine solche Turbineneinheit beziehen;
Speichern solcher bestimmter Turbinenströmungseigenschaften; und
für einen ausgewählten Standort:
Bestimmen der Standortflusseigenschaften für den betreffenden Standort, wobei sich die Standortflusseigenschaften auf den Wasserstromfluss am Standort beziehen;
Speichern solcher bestimmter Standortströmungseigenschaften;
Kombinieren der gespeicherten Turbinenströmungseigenschaften und der gespeicherten Standorteigenschaften, um kombinierte Strömungseigenschaften zu erzeugen; und
Bestimmen einer Anordnung (9) mehrerer Turbineneinheiten (10) für den Standort;
wobei der Standort eine Strömungsrichtung hat und wobei die Wasserstromturbinen-Stromerzeugungseinheiten (10) in einer Reihe angeordnet sind, wobei jede Wasserstromturbinen-Stromerzeugungseinheit von der nächsten Einheit in der Reihe im Wesentlichen parallel und im Wesentlichen senkrecht zur Strömungsrichtung beabstandet ist;
wobei die Wasserstromturbinen-Stromerzeugungseinheiten (10) im Wesentlichen symmetrisch in einer Richtung beabstandet sind, die im Wesentlichen parallel zu einer Hauptströmungsrichtung an dem Standort ist;
wobei die Wasserstromturbinen-Stromerzeugungseinheiten (10) im Wesentlichen symmetrisch in einer Richtung beabstandet sind, die im Wesentlichen senkrecht zu einer Hauptströmungsrichtung an dem Standort ist; und
wobei die Packungsdichte der Wasserstromturbinen-Stromerzeugungseinheiten (10) an den Enden der Anordnung (9) höher ist, so dass der einströmende Wasserstromfluss zur Mitte der Anordnung (9) umgeleitet wird.

4. Verfahren nach Anspruch 3, wobei der Standort zumindest eine Begrenzung (11) hat, und wobei sich der Abstand (10) der Turbineneinheiten näher zu der zumindest einen Umgrenzung (11) verringert.

## Revendications

1. Agencement de turbines hydrauliques (9) d'un parc de turbines hydrauliques à un emplacement, l'agencement (9) comprenant :
une pluralité d'unités de production d'énergie de turbine hydraulique (10)
dans lequel l'emplacement présente une direction de débit, et dans lequel les unités de production d'énergie de turbine hydraulique (10) sont agencées en série, chaque unité de production d'énergie de turbine hydraulique étant espacée de l'unité suivante de la série de manière sensiblement parallèle et sensiblement perpendiculaire à la direction de débit ;
dans lequel les unités de production d'énergie de turbine hydraulique (10) sont espacées de manière sensiblement symétrique dans une direction sensiblement parallèle à une direction de débit principale à l'emplacement ;
dans lequel les unités de production d'énergie de turbine hydraulique (10) sont espacées de manière sensiblement symétrique dans une direction sensiblement perpendiculaire à une direction de débit principale à l'emplacement ; et
dans lequel la densité de remplissage des unités de production d'énergie de turbine hydraulique (10) est plus élevée aux extrémités de l'agencement (9), de telle sorte que le débit de courant d'eau entrant est détourné vers le centre de l'agencement (9).

2. Agencement (9) selon la revendication 1, dans lequel l'emplacement présente au moins une limite (11), et dans lequel l'espacement des unités de turbine (10) diminue plus près de l'au moins une limite (11).

3. Procédé de détermination d'un agencement (9) d'unités de turbine (10) d'un parc de turbines hydrauliques qui comprend une pluralité d'unités de production d'énergie de turbine hydraulique (10) agencées selon un modèle prédéterminé, le procédé comprenant :
la détermination des caractéristiques de débit de turbine d'une unité de production d'énergie de turbine, les caractéristiques de débit de turbine étant relatives au débit d'eau autour d'une telle unité de turbine ;
le stockage de telles caractéristiques de débit de turbine déterminées ; et
pour un emplacement sélectionné :
la détermination des caractéristiques de débit d'emplacement pour l'emplacement concerné, les caractéristiques de débit d'emplacement étant relatives au débit de courant d'eau à l'emplacement ;
le stockage de telles caractéristiques de débit d'emplacement déterminées ;
la combinaison des caractéristiques de débit de turbine stockées et des caractéristiques d'emplacement stockées afin de produire des caractéristiques de débit combinées; et
la détermination d'un agencement (9) d'une pluralité d'unités de turbine (10) pour l'emplacement ;
dans lequel l'emplacement présente une direction de débit, et dans lequel les unités de production d'énergie de turbine hydraulique (10) sont agencées en série, chaque unité de production d'énergie de turbine hydraulique étant espacée de l'unité suivante de la série de manière sensiblement parallèle et sensiblement perpendiculaire à la direction de débit ;
dans lequel les unités de production d'énergie de turbine hydraulique (10) sont espacées de manière sensiblement symétrique dans une direction sensiblement parallèle à une direction de débit principale à l'emplacement ;
dans lequel les unités de production d'énergie de turbine hydraulique (10) sont espacées de manière sensiblement symétrique dans une direction sensiblement perpendiculaire à une direction de débit principale à l'emplacement ; et
dans lequel la densité de remplissage des unités de production d'énergie de turbine hydraulique (10) est plus élevée aux extrémités de l'agencement (9), de telle sorte que le débit de courant d'eau entrant est détourné vers le centre de l'agencement (9).

4. Procédé selon la revendication 3, dans lequel l'emplacement présente au moins une limite (11), et dans lequel l'espacement des unités de turbine (10) diminue plus près de l'au moins une limite (11).
